## Europäisches Patentamt
## European Patent Office
## Office européen des brevets

(11) Veröffentlichungsnummer: **0 233 439**
**B1**

(12) **EUROPÄISCHE PATENTSCHRIFT**

(45) Veröffentlichungstag der Patentschrift:
12.07.89

(21) Anmeldenummer: 86810622.0

(22) Anmeldetag: 31.12.86

(51) Int. Cl.⁴: **B29C 37/00, B29C 67/14,**
**B29C 53/80, B29C 53/84**
**// B29L23/00**

(54) Verfahren und Vorrichtung zur kontinuierlichen Herstellung faserverstärkter Kunststoff-Hohlprofile und Kunststoff-Hohlprofil.

(30) Priorität: 07.02.86 CH 498/86

(43) Veröffentlichungstag der Anmeldung:
26.08.87 Patentblatt 87/35

(45) Bekanntmachung des Hinweises auf die Patenterteilung:
12.07.89 Patentblatt 89/28

(84) Benannte Vertragsstaaten:
AT BE CH DE ES FR GB GR IT LI LU NL SE

(56) Entgegenhaltungen:
CH-A- 380 366
CH-A- 495 830
FR-A- 1 134 871
FR-A- 1 407 664
FR-A- 2 096 480
GB-A- 897 940
GB-A- 2 078 599
US-A- 3 033 729
(73) Patentinhaber: Futurtech AG, Austrasse 52,
FL-9490 Vaduz(LI)

(72) Erfinder: Lona, Norbert, Brunnenstrasse 9,
CH-9400 Rorschacherberg(CH)

(74) Vertreter: White, William et al,
PATENTANWALTS-BUREAU ISLER AG
Postfach 6940 Walchestrasse 23, CH-8023 Zürich(CH)

## Beschreibung

Aus der US-PS 3 689 343 ist ein Verfahren und eine Vorrichtung gemäss Oberbegriff der Ansprüche 1 und 9 zur Herstellung von faserverstärkten Hohlprofilen bekannt. Bei diesem bekannten Verfahren wird auf einen Teil der Breite einer von einer Vorratsrolle abgezogenen Trennfolie eine Gelcoat-Schicht aufgetragen und angeliert. Auf die Gelcoat-Schicht wird ein Faservlies gepresst. Mit diesem Laminat wird ein Dorn derart umhüllt, dass die Längsränder der Gelcoat-Schicht und des Vlieses aneinander stossen. Die überstehenden freien Längsränder der Trennfolie werden in einem Schlitz des Dorns aufgenommen. Auf die damit gebildete Innenwand des Hohlprofils werden harzgetränkte, längsverlaufende Rowingstränge aufgebracht. Diese werden mit einer ebenfalls aus einer Trennfolie, darauf aufgetragenen und angelierten Gelcoat-Schicht und einem angepressten Faservlies bestehenden Aussenwand in einem Formwerkzeug umhüllt und radial verdichtet. In einer Heizeinrichtung am Ende des Formwerkzeuges wird das Harz abgebunden. Das Hohlprofil wird am hinteren Ende der Vorrich tung durch eine Greifeinrichtung kontinuierlich abgezogen und durch eine Ablängeinrichtung abgelängt.

Die Gelcoat-Schicht verleiht dem hergestellten Hohlprofil eine glatte Oberfläche und eine hohe Korrosionsbeständigkeit. Nachteilig an den nach diesem Verfahren hergestellten Hohlprofilen sind die aneinander stossenden Seitenränder der Gelcoat-Schichten, welche sich nach dem Angelieren nur unvollständig miteinander verbinden. An derselben Nahtstelle stossen auch die miteinander nicht verbundenen Längsränder der Faservliese zusammen, so dass diese Nahtstelle verletzlich ist. Im Formwerkzeug wird das Hohlprofil wohl radial gepresst. Die Pressdrücke können aber nicht hoch gewählt werden, weil sonst die Reibung im Formwerkzeug und auf dem feststehenden Dorn die Zugfestigkeit des Hohlprofils übersteigen würde. Damit lassen sich Lufteinschlüsse nicht vermeiden, was die Festigkeit des Hohlprofils beeinträchtigt. Die Rowingstränge sind untereinander nur durch das Kunstharz verbunden. Sie erhöhen zwar die Biege- und Zugfestigkeit des Hohlprofils, tragen jedoch zu seiner Druckfestigkeit nicht bei. Diese ist wegen der Nahtstellen der Faservliese bescheiden.

Die Aufgabe der Erfindung besteht darin, ein Verfahren und eine Vorrichtung zur kontinuierlichen Herstellung faserverstärkter Hohlprofile anzugeben, mit welchen Hohlprofile hoher Festigkeit herstellbar sind. Diese Aufgabe wird durch die kennzeichnenden Merkmale der Ansprüche 1 und 9 gelöst. Das erfindungsgemässe Hohlprofil ist im Anspruch 18 umschrieben.

Weil die innere Gelcoat-Schicht auf dem Dorn auf die Trennfolie aufgetragen wird, ist sie nahtlos und gewährleistet einen sicheren Schutz der faserarmierten Kunststoffschichten. Die Ueberlappung der innersten Faserschicht und das Aushärten des darin enthaltenen Kunststoffs verleiht dem Hohlprofil eine hinreichende Festigkeit, so dass der Dorn anschliessend an die dritte Heizeinrichtung abgesetzt werden kann. Zum Auftragen der weiteren mit Kunststoff getränkten Faserschichten ist dann eine Stützung durch den Dorn nicht mehr nötig, so dass die Lufteinschlüsse in diesen Schichten, insbesondere durch Walken, weitgehend entfernt werden können, ohne dass dadurch die Reibung auf dem Dorn erhöht wird. Zudem ist es möglich, mindestens einige der weiteren Schichten zu wickeln, ohne damit die Reibung auf dem Dorn zu erhöhen. Damit kann eine hohe Druckfestigkeit des Hohlprofils erzielt werden.

Aus der GB-PS 1 350 298 ist ebenfalls ein Verfahren und eine Vorrichtung zur Herstellung faserarmierter Kunststoffprofile bekannt. Auf einer flachen, ebenen Bahn wird eine kontinuierlich zugeführte Trennfolie mit Gelcoat beschichtet und der Gelcoat angeliert. Auf die Gelcoatschicht wird flüssiges Kunstharz und ein Faserband aufgebracht. Anschliessend wird das bis dahin ebene Laminat zu einem Profil geformt und das Kunstharz in einem Durchlaufofen ausgehärtet. Es ist zwar in der Gb-PS 1 350 298 erwähnt, die Längsränder des Laminates könnten überlappt und damit ein Hohlprofil hergestellt werden. Dies ist jedoch nicht möglich, weil die Trennfolie ein Verbinden der überlappten Längsränder verhindern würde. Ein druckfestes Hohlprofil hoher Festigkeit kann auf diese Art nicht hergestellt werden.

Aus der US-PS 3 033 729 ist ein Verfahren und eine Vorrichtung zum kontinuierlichen Herstellen von GFK-Rohren bekannt. Hier werden Rowingstränge durch ein Bad mit flüssigem Kunstharz geführt und annähernd axial peripher einem beheizten Dorn zugeführt. Mit dieser Heizung wird das Kunstharz etwas angehärtet. Auf das angehärtete Kunstharz werden Rowingstränge gewickelt und schliesslich wird das Kunstharz in einem Durchlaufofen ausgehärtet. Bei diesem Verfahren ist es unmöglich, das Rohr mit einer inneren Gelcoatschicht zu versehen. Das nur angehärtete Kunstharz ist zu wenig stabil, so dass die Rowingstränge nur lose gewickelt werden können, andererseits aber zu wenig flüssig, als dass sich die gewickelten Rowingstränge zuverlässig mit dem Harz verbinden könnten. Das nach diesem Verfahren hergestellte Rohr enthält aus diesen Gründen viele Lufteinschlüsse, ist undicht und hat eine bloss bescheidene Festigkeit.

Nachfolgend wird ein Ausführungsbeispiel der Erfindung anhand der Zeichnung erläutert. Darin zeigt:

Fig. 1a & 1b eine schematische Darstellung der Vorrichtung,

Fig. 2 einen Längsschnitt durch den Dorn,

Fig. 3 einen Querschnitt nach der Linie III - III in Fig. 1, und

Fig. 4 einen Querschnitt nach der Linie IV - IV in Fig. 1.

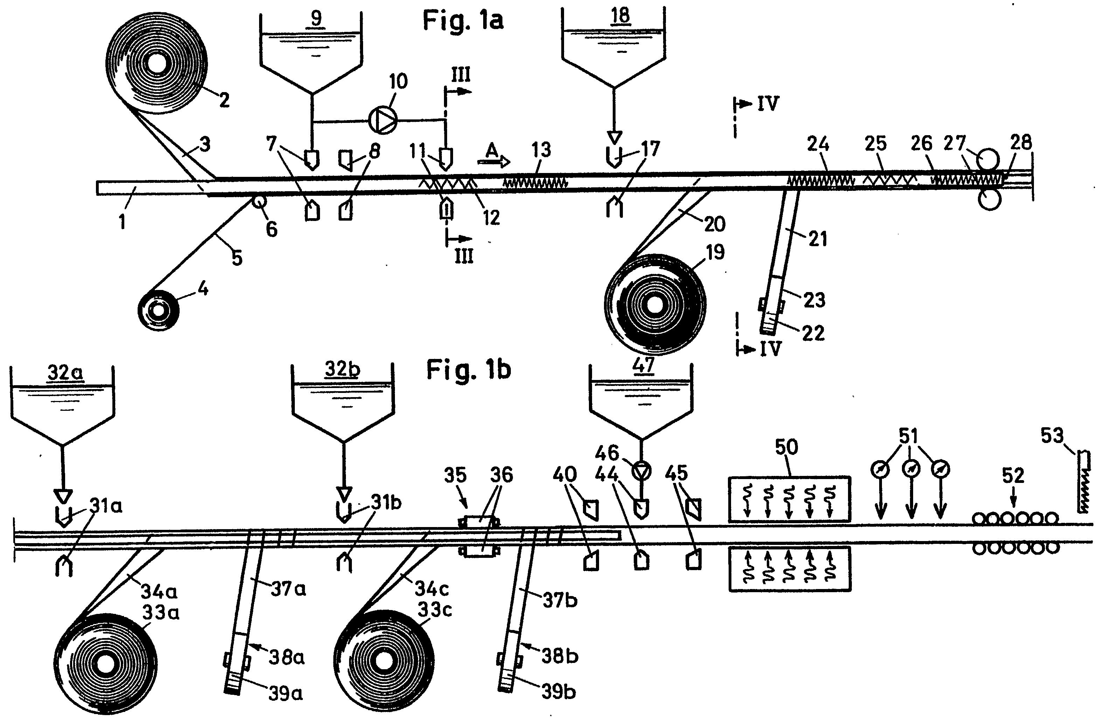

In Fig. 1 ist die Vorrichtung zum besseren Verständnis der einzelnen Verfahrensschritte schematisch dargestellt, wobei die Fig. 1b rechts an die Fig. 1a anschliesst.

Auf einen feststehenden Dorn 1 wird zunächst eine von einem ortsfest gelagerten Bandmagazin 2 abgezogene Trennfolie 3 aufgebracht. Die Folie 3 umhüllt den Dorn 1. Ihre Längsränder überlappen sich. Der äussere überlappende Längsrand wird mittels eines von einer Vorratsrolle 4 abgezogenen Klebstreifens 5 auf dem überlappten Längsrand fixiert. Der Klebstreifen 5 wird mit einer Rolle 6 angedrückt. Damit bildet die Trennfolie 3 eine rohrförmige Trennschicht, welche auf dem Dorn 1 gleitet.

Auf die Trennfolie 3 wird hinter der Rolle 6 über eine ringförmige Zuführeinrichtung 7 mit einem Ringspalt flüssiger Gelcoat in einer Stärke von etwa 0,4 mm aufgetragen und mit einer Ringblende 8 kalibriert, so dass sich um die Folie 3 eine nahtlose Gelcoat-Schicht bildet. Als Gelcoat eignet sich ein Duroplast, z.B. ein Polyester mit hohem Weichmacheranteil. Die Gelcoat-Schicht ist elastischer als das anschliessend aufzutragende faserarmierte Duroplast und kann durch seine Zusammensetzung dem Verwendungszweck angepasst werden. Der flüssige Gelcoat wird der Zuführeinrichtung 7 aus einem Behälter 9 angeliefert.

In Abzugsrichtung A des Profils hinter der Ringblende 8 ist der Dorn 1 durch eine Heizung 12 beheizt, so dass hier die Gelcoat-Schicht teilweise geliert. Die Wärmeübertragung ist durch den direkten Kontakt der Folie 3 mit dem Dorn 1 sehr gut, so dass über eine kurze Wegstrecke die zum Gelieren der Gelcoat-Schicht erforderliche Temperatur erreicht werden und ein Ueberhitzen dieser Schicht vermieden werden kann. Anschliessend an die Heizung 12 wird der Dorn 1 mit einer Kühlschlange 13 gekühlt.

Wenn grössere Schichtstärken der Gelcoatschicht erwünscht sind, wird über die mit der Zuführeinrichtung 7 aufgebrachte erste Lage in der Gegend der Heizung 12, d.h. an einer Stelle, an welcher die Viskosität der ersten Lage bereits wesentlich höher ist, eine zweite Lage mittels um die Dornachse schwenkbarer Düsen 11 aufgespritzt. Der flüssige Gelcoat wird den Düsen 11 mit einer Pumpe 10 aus dem Behälter 9 zugeführt. Für noch grössere Wandstärken können mehrere dieser Spritzeinrichtungen hintereinander angeordnet werden, wobei die Heizung 12 entsprechend verlängert wird. Durch das Auftragen der Gelcoat-Schicht in mehreren Lagen wird erreicht, dass die Schicht trotz Schwerkrafteinwirkung über den Umfang gleichmässige Wandstärke hat.

Nun wird auf die angelierte Gelcoat-Schicht über eine ringförmige Zuführeinrichtung 17 mit einem Ringspalt flüssiges Duroplast aus einem Behälter 18 auf die Gelcoat-Schicht aufgetragen. Von einer Vorratsrolle 19 mit feststehender Drehachse wird eine gewobene Glasmatte 20 abgezogen. Diese wird in Längsrichtung des Hohlprofils mit überlappenden Längsrändern auf die Duroplastschicht aufgebracht. Ein weiteres gewobenes Glasfaserband 21 wird von einer Vorratsrolle 22 abgezogen, die in einem um die Dornachse drehbaren Magazin 23 gelagert ist, und wendelförmig überlappend um die Matte 20 geschlungen. In Abzugsrichtung A hinter diesem Magazin 23 ist der Dorn 1 durch eine weitere Heizung 24, 25 beheizt, wobei eine erste Heizschlange 24 die Abwärme von der Kühlschlange 13 und/oder einer anschliessenden weiteren Kühlschlange 26 ausnützt. Damit kann der Energieaufwand für die Heizung gering gehalten werden. Die Wärmerückgewinnung wird durch die direkte Wärmeübertragung über den Dorn ermöglicht. Beim Durchlaufen der Heizungen 24, 25 wird der Duroplast ausgehärtet, so dass ein dünnwandiges faserarmiertes Duroplast-Hohlprofil als Stützprofil für die anschliessend aufzutragenden Schichten entsteht. Dieses Stützprofil wird über Stützrollen 27 abgestützt, die auf dem bereits ausgehärteten faserarmierten Duroplast laufen. Anschliessend an die Heizung 25 hat der Dorn die erwähnte weitere Kühlschlange 26, um das Stützprofil zu kühlen, damit die anschliessend aufzutragenden Duroplastschichten nicht vorzeitig aushärten. Das Stützprofil ist hinreichend steif für die nachfolgenden Operationen, so dass im Dorn anschliessend an die Kühlschlange 26 eine Stufe 28 auf einen geringeren Durchmesser angeordnet ist. Der Dorn 1 kann an dieser Stelle auch enden.

Auf das nun eigenstabile Stützprofil werden in mehreren aufeinanderfolgenden Stufen a, b je flüssiges Duroplast, eine längsverlaufende Glasfasermatte 34 und ein wendelförmig ge wickeltes Glasfaserband 37 aufgetragen. Dabei entsprechen die Zuführeinrichtungen 31a, 31b für Duroplast, abgesehen vom Innendurchmesser, der Einrichtung 17 und die Behälter 32a, 32b dem Behälter 18. Die gewobenen Glasfasermatten 34a, 34b werden wie die Matte 20 von ortsfest gelagerten Vorratsrollen 33a, 33b, 33c abgezogen. Ihre Längsränder überlappen sich ebenfalls, wobei die Ueberlappungsstellen in Umfangsrichtung gegeneinander versetzt sind. Dazu sind auch die Drehachsen der Vorratsrollen 19, 33a, 33b um die Dornachse verteilt angeordnet. In Fig. 1b sind sie bloss der besseren Uebersicht wegen in Dornachsrichtung fluchtend hintereinander angeordnet gezeichnet. Die Glasfasermatten 34a, 34b werden jeweils durch ein gewobenes Glasfaserband 37a, 37b wendelförmig überlappend umschlungen und durch den Bandzug radial gepresst, so dass die Schichten 34a, 37a bzw. 34b, 37b mit dem zuvor aufgebrachten Duroplast getränkt werden und Lufteinschlüsse weitgehend ausgepresst werden. Diesem Zweck dient zudem eine um die Dornachse drehbare Walkeinrichtung 35 mit mehreren über den Umfang des Hohlprofils gleichmässig verteilten Walzen 36. Die Walkeinrichtung 35 kann vor oder hinter der letzten Bandstation 37b, 38b, 39b angeordnet sein. Nun wird das Hohlprofil durch eine Kalibrierblende 40 durchgezogen, in welcher die Profilwand verdichtet und überschüssiges Duroplast abgestreift wird. Hinter der Kalibrierblende 40 wird mittels mehrerer, um die Dornachse schwenkbarer Düsen 44 eine äussere Gelcoat-Schicht aufgespritzt und in einer weiteren Kalibrierblende 45 kalibriert. Der flüssige Gelcoat, z.B. wiederum ein Polyester mit hohem Weichmacheranteil,wird den Düsen 44 über eine Pumpe 46 von einem Behälter 47 zugeführt.

Das Hohlprofil passiert hierauf einen Durchlaufofen 50, in welchem der Duroplast und die äussere Gelcoat-Schicht von aussen geheizt und ausgehärtet werden, sowie mehrere Messstationen 51 zur Kontrolle des Durchmessers, der Wandstärke und der Härte.

Das nun fertige Hohlprofil wird durch eine Greifeinrichtung 52 kontinuierlich vom Dorn 1 abge-

zogen und durch eine Ablängeinrichtung 53 auf die gewünschte Profillänge abgelängt. Geeignete Greif- und Ablängeinrichtungen sind von Strangziehvorrichtungen für Vollprofile bekannt.

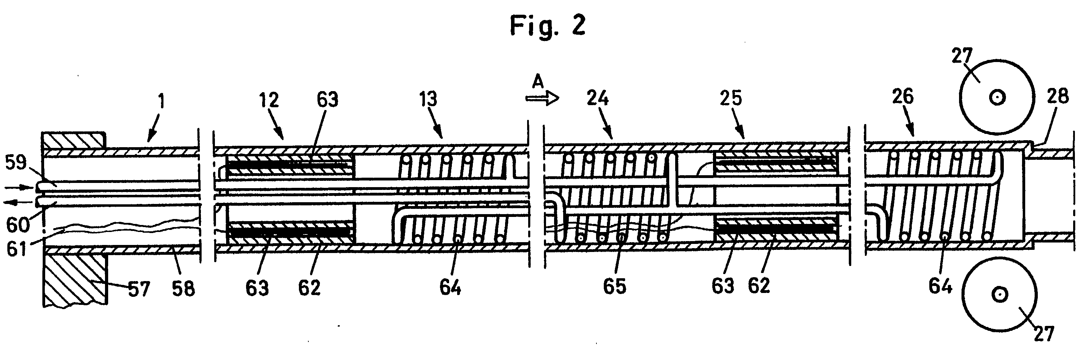

In Fig. 2 ist ein Längsschnitt durch den Dorn 1 mit den Heiz-und Kühleinrichtungen dargestellt. Der Dorn 1 ist in einem Lagerständer 57 eingespannt und besteht aus einem Stahlrohr, durch welches ein Zufuhrrohr 59 und ein Abflussrohr 60 für Kühlwasser sowie elektrische Leitungen 61 für die Heizung führen. Die Heizungen 12 und 25 umfassen je eine im Rohr 58 innen anliegende Hülse 62 aus Aluminium oder Kupfer mit mehreren gleichmässig über den Umfang verteilten, thermostatisch geregelten elektrischen Heizstäben 63. Die Heizstäbe 63 sind pro Heizung 12, 25 untereinander elektrisch verbunden und je an eine der Leitungen 61 angeschlossen. Die Kühleinrichtungen 13 und 26 bestehen je aus einer wärmeleitend mit dem Rohr 58 verbundenen Rohrwendel 64, deren in Abzugrichtung A gesehen hinteres Ende mit der Zufuhrleitung 59 und deren vorderes Ende mit dem hinteren Ende einer weiteren, die Vorheizung 24 bildenden Rohrwendel 65 verbunden ist. Das vordere Ende der Wendel 65 ist an die Abflussleitung 60 angeschlossen. Die Vorheizung 24 nützt also die Abwärme beider Kühleinrichtungen 13, 26 aus.

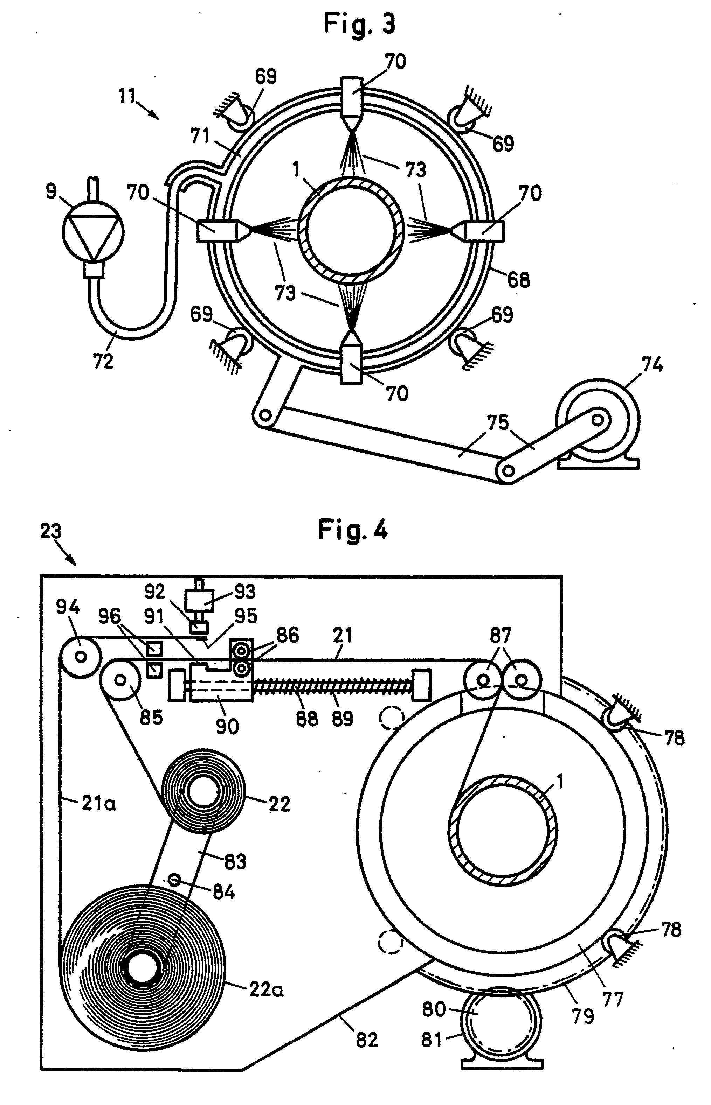

Fig. 3 zeigt einen Querschnitt durch die Einrichtung 11 zum Auftragen der inneren Gelcoat-Schicht. Um die Achse des Dorns 1 ist ein ringförmiger Träger 68 auf Rollen 69 drehbar gelagert. Auf dem Umfang des Trägers 68 sind vier radial nach innen gerichtete Spritzdüsen 70 gleichmässig verteilt befestigt. Die Spritzdüsen 70 werden durch ein Verteilungsrohr 71 über einen flexiblen Schlauch 72 von der Pumpe 9 mit flüssigem Gelcoat beliefert. An die Spritzdüsen 70 ist ferner eine nicht dargestellte Druckluftleitung zur Zerstäubung des Gelcoat-Materials angeschlossen. Die Düsen 70 können radial einstellbar am Träger 68 befestigt sein, um nach Auswechseln des Dorns 1 Hohlprofile unterschiedlicher Innenabmessungen herstellen zu können. Aus den Düsen 70 tritt das Gelcoat-Material als feiner Sprühstrahl 73 aus. Um eine gleichmässige Stärke der Gelcoat-Schicht zu erreichen, wird der Träger 68 um die Dornachse mittels eines Motors 74 und eines Kurbeltriebs 75 hin und her geschwenkt. Die Einrichtung 44 zum Auftragen der äusseren Gelcoat-Schicht ist gleich aufgebaut wie die in Fig. 3 dargestellte Einrichtung 11.

In Fig. 4 ist die Zuführung des Glasfaserbandes 21 vom Bandmagazin 23 dargestellt. Das Bandmagazin 23 umfasst einen rohrförmigen, koaxial zum Dorn 1 angeordneten Träger 77, der, z.B. mittels Rollen 78, um die Dornachse drehbar gelagert und über einen Zahnkranz 79 mit dem Ritzel 80 eines Motors 81 angetrieben wird. Am Träger 77 ist radial abstehend eine Trägerplatte 82 angeschweisst. Auf dieser ist ein Halter 83 für die Vorratsrolle 22 sowie eine Reserverolle 22a um eine Achse 84 drehbar befestigt. Der Halter 83 rastet in der dargestellten sowie in einer um 180° gedrehten Lage ein. Das Band 21 ist über eine Umlenkrolle 85, ein Walzenpaar 86 und ein weiteres, zur Regelung der Bandspannung gebremstes Walzenpaar 87 geführt. Das Walzenpaar 86 ist an einem längs einer Stange 88 verschiebbaren, durch eine Feder 89 in die dargestellte Grundstellung vorbelasteten Schlitten 90 befestigt. Der Schlitten 90 hat eine Pressfläche 91, über welche das Band 21 geführt ist. Der Pressfläche 91 gegenüberliegend ist ein Andrückbalken 92 am Schlitten 90 verschiebbar gelagert. Der Balken 92 kann mittels eines Solenoids 93 gegen die Pressfläche 91 angedrückt werden. Der Bandanfang 21a der Reserverolle 22a ist um eine weitere Umlenkrolle 94 geführt. Das vordere Ende des Bandanfangs 21a ist leicht lösbar am Balken 92 befestigt. Auf seiner Unterseite, dem Band 21 zugewandt, ist ein doppelseitiges, trägerloses Klebband 95 aufgeklebt.

Im Betrieb dreht der Träger 77 und mit ihm das ganze Bandmagazin 23 mit gleichförmiger Geschwindigkeit um die Achse des Dorns 1 entsprechend der Abzugsgeschwindigkeit des Profils vom Dorn 1 derart, dass sich die Längsränder des Bandes 21 überlappen. Wenn die Vorratsrolle 22 aufgebraucht ist, wird das Bandende durch eine Lichtschranke 96 festgestellt und damit das Solenoid 93 betätigt. Der Balken 92 presst nun das vordere Ende des Bandanfangs 21a der Reserverolle 22a mit dem Klebband 95 gegen das hintere Ende des Bandes 21 und verbindet diese beiden Enden miteinander. Während des Pressens läuft der Schlitten 90 entgegen der Kraft der Feder 89 mit dem Band 21 mit. Mit einer vorgegebenen Verzögerung wird das Solenoid 93 wieder ausgeschaltet, so dass der Schlitten 90 in die dargestellte Grundstellung zurückkehrt. Das Bandmagazin 23 dreht relativ langsam um die Dornachse, so dass die nachfolgenden Operationen zur Einführung einer neuen Reserverolle von Hand durchgeführt werden können. Zunächst wird der Halter 83 im Uhrzeigersinn um 180° geschwenkt und der Bandanfang 21a von der Umlenkrolle 94 auf die Umlenkrolle 85 übergeführt und in die Lichtschranke 96 eingefädelt. Auf den nun leeren Dorn des Halters 83 wird eine neue Reserverolle 22a aufgesteckt, auf das vordere Ende ihres Bandanfangs ein Klebband 95 aufgeklebt, und dieses Ende am Balken 92 befestigt. Damit ist das Bandmagazin 23 wiederum für den nächsten Bandwechsel vorbereitet.

Die Bandmagazine 38a und 38b sind gleich ausgebildet wie das in Fig. 4 dargestellte Magazin 23. Die in Fig. 4 dargestellte automatische Verbindung vom Bandende einer Vorratsrolle mit dem Bandanfang einer Reserverolle ist grundsätzlich auch für die Glasfasermatten 20, 34a und 34b sowie für die Trennfolie 3 und das Klebband 5 möglich. Da jedoch die Abzuggeschwindigkeiten der Matten 20, 34, der Folie 3 und des Klebbandes 5 wesentlich geringer sind als die Abzugsgeschwindigkeit des Bandes 21, ist hier ein rein manuelles Auswechseln der Vorratsrollen und Verbinden der Bandenden zweckmässiger.

Zur Faserverstärkung eignen sich ausser Glasfasern z.B. auch Kohlefasern, Aramidfasern oder Silikatfasern. Als Bindemittel eignen sich grundsätzlich Duroplaste, insbesondere Polyester. Mit dem Verfahren sind Hohlprofile mit beliebigem Umriss herstellbar, vorausgesetzt dass die Aussenkontur keine konkaven Stellen aufweist. Besonders geeignet ist das Verfahren zur Herstellung von Rohren mit Kreisquerschnitt.

**Patentansprüche**

1. Verfahren zur kontinuierlichen Herstellung faserverstärkter Kunststoff-Hohlprofile, wobei um einen feststehenden Dorn (1) eine Trennfolie (3), eine innere Gelcoat-Schicht und eine erste Fasermaterialschicht (20,21) aufgebracht wird, anschliessend weitere Schichten (34,37) aus Fasermaterial und flüssigem Kunststoff um die erste Fasermaterialschicht (20,21) gelegt, das Hohlprofil in einem Formwerkzeug (40) kalibriert und anschliessend erhitzt wird, so dass der Kunststoff aushärtet, und wobei das ausgehärtete Hohlprofil mit einer Greifeinrichtung (52) kontinuierlich vom Dorn (1) abgezogen und schliesslich abgelängt wird, dadurch gekennzeichnet, dass die innere Gelcoat-Schicht auf die auf den Dorn (1) aufgebrachte Trennfolie (3) aufgetragen und durch Erwärmen angeliert wird, dass die erste Fasermaterialschicht (20,21) mit flüssigem Kunststoff überlappend auf die innere Gelcoat-Schicht aufgelegt wird, und dass vor dem Aufbringen der weiteren Schichten (34,37) aus Fasermaterial das Hohlprofil erwärmt und der Kunststoff in der ersten Fasermaterialschicht (20,21) ausgehärtet wird.

2. Verfahren nach Anspruch 1, dadurch gekennzeichnet, dass die innere Gelcoat-Schicht aus mindestens zwei Lagen aufgebaut wird, wobei die der ersten Lage folgenden Lage(n) nach Beginn des Erwärmens der Gelcoat-Schicht aufgespritzt wird bzw. werden.

3. Verfahren nach Anspruch 2, dadurch gekennzeichnet, dass die innere Gelcoat-Schicht nach dem Erwärmen und vor dem Aufbringen der ersten Fasermaterialschicht (20,21) abgekühlt wird.

4. Verfahren nach Anspruch 2 oder 3, dadurch gekennzeichnet, dass vor dem Aufbringen der ersten Fasermaterialschicht (20,21) flüssiger Kunststoff auf die Gelcoat-Schicht aufgetragen wird.

5. Verfahren nach einem der Ansprüche 1 bis 4, dadurch gekennzeichnet, dass das Hohlprofil nach dem Aufbringen der ersten Fasermaterialschicht (20,21) von der Innenseite erwärmt wird.

6. Verfahren nach einem der Ansprüche 1 bis 5, dadurch gekennzeichnet, dass das Hohlprofil abgekühlt wird, bevor die weiteren Fasermaterialschichten (34,37) mit dem Kunststoff aufgebracht werden.

7. Verfahren nach einem der Ansprüche 1 bis 6, dadurch gekennzeichnet, dass zum Aufbringen der weiteren Faser materialschichten (34,37) nacheinander mindestens je eine flüssige Kunststoffschicht, eine in Längsrichtung des Hohlprofils verlaufende Fasermatte (34) mit überlappenden Längsrändern sowie ein wendelförmig gewickeltes Faserband (37) aufgetragen werden, und dass die weiteren Fasermaterialschichten (34,37) gewalkt werden.

8. Verfahren nach einem der Ansprüche 1 bis 7, dadurch gekennzeichnet, dass nach dem Aufbringen der weiteren Fasermaterialschichten (34,37) das Hohlprofil kalibriert wird, und dass vor dem abschliessenden Heizen eine äussere Gelcoat- Schicht auf das kalibrierte Hohlprofil aufgetragen, vorzugsweise aufgespritzt, und ebenfalls kalibriert wird.

9. Vorrichtung zur kontinuierlichen Herstellung von faserverstärkten Kunststoff-Hohlprofilen, mit einem feststehenden Dorn (1), einer Zuführeinrichtung (2) für eine Trennfolie (3), einer Einrichtung (7,11) zum Auftragen einer inneren Gelcoat-Schicht auf die Trennfolie (3), einer Zuführeinrichtung (19,23) für eine erste Fasermaterialschicht (20,21), weiteren Zuführeinrichtungen (31,33,38) für weitere Fasermaterialschichten (34,37) und flüssigen Kunststoff, einer Kalibriereinrichtung (40), einer ersten Heizeinrichtung (50), einer Greifeinrichtung (52) zum kontinuierlichen Abziehen des Hohlprofils vom Dorn (1), sowie einer Abläng einrichtung (53), dadurch gekennzeichnet, dass in Abzugrichtung des Hohlprofils gesehen hinter der Trennfolienzuführeinrichtung (2) die Einrichtung (7,11) zum Auftragen der inneren Gelcoat-Schicht um den Dorn (1) herum sowie eine zweite Heizeinrichtung (12) und hinter der Zuführeinrichtung (19,23) für die erste Fasermaterialschicht (20,21) eine dritte Heizeinrichtung (24,25) angeordnet sind, und dass der Dorn (1) hinter der dritten Heizeinrichtung (24,25) und vor den weiteren Zuführeinrichtungen (33,38) für weitere Fasermaterialschichten abgesetzt ist.

10. Vorrichtung nach Anspruch 9, dadurch gekennzeichnet, dass die zweite und dritte Heizeinrichtung (12,24,25) im Dorn (1) angeordnet sind.

11. Vorrichtung nach Anspruch 10, dadurch gekennzeichnet, dass hinter der zweiten und dritten Heizeinrichtung (12,24,25) je eine Kühleinrichtung (13,26) angeordnet ist.

12. Vorrichtung nach einem der Ansprüche 9 bis 11, dadurch gekennzeichnet, dass in Abzugrichtung des Hohlprofils gesehen vor der Zuführeinrichtung (19,23) für die erste Fasermaterialschicht (20,21) eine Einrichtung (17) zum Beschichten der Gelcoat-Schicht mit flüssigem Kunststoff angeordnet ist.

13. Vorrichtung nach einem der Ansprüche 9 bis 12, dadurch gekennzeichnet, dass vor der Kalibriereinrichtung (40) eine Walkeinrichtung (35) angeordnet ist.

14. Vorrichtung nach einem der Ansprüche 9 bis 13, dadurch gekennzeichnet, dass mindestens eine (38) der weiteren Zuführeinrichtungen (33,38) für weitere Fasermaterialschichten (34,37) ein um die Dornachse drehbares Bandmagazin (38) umfasst.

15. Vorrichtung nach einem der Ansprüche 9 bis 14, dadurch gekennzeichnet, dass in Abzugrichtung des Hohlprofils gesehen vor der ersten Heizeinrichtung (50) eine Einrichtung (44) zum Auftragen einer äusseren Gelcoat-Schicht angeordnet ist.

16. Vorrichtung nach einem der Ansprüche 9 bis 15, dadurch gekennzeichnet, dass die Zuführeinrichtung (19,23) für die erste Fasermaterialschicht (20,21) ein um die Dornachse drehbares Bandmagazin (23) umfasst.

17. Vorrichtung nach einem der Ansprüche 9 bis 16, dadurch gekennzeichnet, dass in Abzugrichtung des Hohlprofils gesehen hinter der dritten Heizeinrichtung (24,25) Stützrollen (27) für das Hohlprofil angeordnet sind.

18. Faserverstärktes Hohlprofil, mit einer inneren und einer äusseren Gelcoat-Schicht und dazwischen liegenden Schichten aus Fasermaterial und Duroplast, dadurch gekennzeichnet, dass die Fasermaterialschichten (20,21,34,37) anschliessend an die innere Gelcoat-Schicht mehrere Schichten mit je einer in Längsrichtung des Hohlprofils verlaufenden Fasermatte (20,34) mit überlappten Längsrändern und einem überlappend wendelförmig gewundenen Faserband (21,37) umfassen.

19. Hohlprofil nach Anspruch 18, dadurch gekennzeichnet, dass sowohl die Fasermatten (20,34) als auch die Faserbänder (21,37) aus Gewebe bestehen.

20. Hohlprofil nach Anspruch 18 oder 19, dadurch gekennzeichnet, dass die Ueberlappungen der verschiedenen Schichten aus Fasermatten (20,34) in Umfangsrichtung gegeneinander versetzt sind.

## Claims

1. A process for the continuous production of fibre-reinforced plastics hollow sections, wherein a parting foil (3), an inner gel coat and a first layer of fibrous material (20, 21) are applied round a stationary mandrel (1), then further layers (34, 37) of fibrous material and liquid plastics material are laid round the first layer of fibrous material (20, 21), the hollow section is calibrated in a forming tool (40) and then heated so that the plastics material is cured, and wherein the cured hollow section is continuously withdrawn from the mandrel (1) by a gripping device (52) and is finally cut into lengths, characterized in that the inner gel coat is applied to the parting foil (3) provided on the mandrel (1) and is gelled by heating, that the first layer of fibrous material (20, 21) with the liquid plastics material is laid, overlapping, on the inner gel coat, and that before the further layers (34, 37) of fibrous material are applied, the hollow section is heated and the plastics material in the first layer of fibrous material (20, 21) is cured.

2. A process according to Claim 1, characterized in that the inner gel coat is built up of at least two layers, the layer(s) following the first layer being sprayed on after the beginning of the heating of the gel coat.

3. A process according to Claim 2, characterized in that the inner gel coat is cooled after the heating and before the application of the first layer of fibrous material (20, 21).

4. A process according to Claim 2 or 3, characterized in that the liquid plastics material is applied to the gel coat before the first layer of fibrous material (20, 21) is applied.

5. A process according to any one of Claims 1 to 4, characterized in that the hollow section is heated from the inside after the application of the first layer of fibrous material (20, 21).

6. A process according to any one of Claims 1 to 5, characterized in that the hollow section is cooled before the further layers of fibrous material (34, 37) are applied with the plastics material.

7. A process according to any one of Claims 1 to 6, characterized in that, in order to apply the further layers of fibrous material (34, 37), at least one each of a layer of liquid plastics material, a fibrous mat (34) extending in the longitudinal direction of the hollow section with overlapping longitudinal edges and a helically wound fibrous ribbon (37) are applied in succession, and that the further layers of fibrous material (34, 37) are fulled.

8. A process according to any one of Claims 1 to 7, characterized in that, after the application of the further layers of fibrous material (34, 37), the hollow section is calibrated, and that before the final heating, an outer gel coat is applied to the calibrated hollow section, preferably being sprayed on, and is likewise calibrated.

9. An apparatus for the continuous production of fibre-reinforced plastics hollow section, having a stationary mandrel (1), a supply device (2) for a parting foil (3), a device (7, 11) for applying an inner gel coat to the parting foil (3), a supply device (19, 23) for a first layer of fibrous material (20, 21), further supply devices (31, 33, 38) for further layers of fibrous material (34, 37) and liquid plastics material, a calibrating device (40), a first heating device (50), a gripping device (52) for the continuous withdrawal of the hollow section from the mandrel (1), and a device (53) for cutting into lengths, characterized in that, seen in the direction of withdrawal of the hollow section, the device (7, 11) for applying the inner gel coat round the mandrel (1) and a second heating device (12) are disposed after the parting-foil supply device (2), and a third heating device (24, 25) is disposed after the supply device (19, 23) for the first layer of fibrous material (20, 21), and in that the mandrel (1) is relieved after the third heating device (24, 25) and before the further supply devices (33, 38) for further layers of fibrous material.

10. An apparatus according to Claim 9, characterized in that the second and third heating devices (12, 24, 25) are disposed in the mandrel (1).

11. An apparatus according to Claim 10, characterized in that cooling devices (13, 26) are disposed, one after the second and one after the third heating device (12, 24, 25).

12. An apparatus according to any one of Claims 9 to 11, characterized in that, seen in the direction of withdrawal of the hollow section, a device (17) for coating the gel coat with liquid plastics material is disposed before the supply device (19, 23) for the first layer of fibrous material (20, 21).

13. An apparatus according to any one of Claims 9 to 12, characterized in that a fulling device (35) is disposed before the calibrating device (40).

14. An apparatus according to any one of Claims 9 to 13, characterized in that at least one (38) of the further supply devices (33, 38) for further layers of fibrous material comprises a band magazine (38) which is rotatable about the axis of the mandrel.

15. An apparatus according to any one of Claims 9 to 14, characterized in that, seen in the direction of withdrawal of the hollow section, a device (44) for applying an outer gel coat is disposed before the first heating device (50).

16. An apparatus according to any one of Claims 9 to 15, characterized in that the supply device (19, 23) for the first layer fibrous material (20, 21) comprises a band magazine (23) which is rotatable about the axis of the mandrel.

17. An apparatus according to any one of Claims 9 to 16, characterized in that, seen in the direction of withdrawal of the hollow section, supporting rollers (27) for the hollow section are disposed after the third heating device (24, 25).

18. A fibre-reinforced hollow section, having an inner and an outer gel coat with layers of fibrous material and thermosetting plastics material lying in between, characterized in that the layers of fibrous material (20, 21, 34, 37) following on the inner gel coat comprise a plurality of layers each with a fibrous mat (20, 34) extending in the longitudinal direction of the hollow section and having overlapped longitudinal edges and with a fibrous ribbon (21, 37) wound helically and overlapping.

19. A hollow section according to Claim 18, characterized in that both the fibre mates (20, 34) and the fibrous ribbons (21, 37) consist of woven fabric.

20. A hollow section according to Claim 18 or 19, characterized in that the overlaps of the various layers of fibrous mats (20, 34) are offset in relation to one another in the circumferential direction.

## Revendications

1. Procédé de fabrication en continu de profilés creux en matière plastique renforcés de fibres, dans lequel on applique sur un mandrin fixe (1), une feuille de séparation (3), une couche de revêtement de gel intérieure et une première couche de matières fibreuses (20, 21), d'autres couches (34, 37) de matières fibreuses et de matière plastique liquide sont ensuite déposées sur la première couche de matières fibreuses (20, 21), puis le profilé creux est calibré dans un moule de formage (40) et est ensuite chauffé de façon que la matière plastique durcisse, le profilé creux durci étant séparé en continu du mandrin (1) par un dispositif de prise (52) et coupé finalement en longueurs désirées, caractérisé en ce que la couche de revêtement de gel intérieure est appliquée sur la feuille de séparation (3) enrobée sur le mandrin (1) et est gélifiée par chauffage; en ce que la première couche de matières fibreuses (20, 21) est déposée, avec la matière plastique liquide, en se recouvrant, sur la couche de revêtement de gel intérieur et en ce qu'avant 1, l'application des autres couches (34, 37) de matières fibreuses, le profilé creux est chauffé et la matière plastique de la première couche de matières fibreuses (20, 21) est durcie.

2. Procédé selon la revendication 1, caractérisé en ce que la couche de revêtement de gel intérieure se compose au moins de deux plis, le ou les plis succédant au premier pli étant projeté ou projetés après le début du réchauffement de la couche de revêtement de gel.

3. Procédé selon la revendication 2, caractérisé en ce que la couche de revêtement de gel intérieure est refroidie après le réchauffement et avant l'application de la première couche de matières fibreuses (20, 21).

4. Procédé selon l'une quelconque des revendications 2 et 3, caractérisé en ce qu'une matière plastique liquide est appliquée sur la couche de revêtement de gel avant le dépôt de la première couche de matières fibreuses (20, 21).

5. Procédé selon l'une quelconque des revendications 1 à 4, caractérisé en ce que le profilé creux est chauffé à partir de la face interne après l'application de la première couche de matières fibreuses (20, 21).

6. Procédé selon l'une quelconque des revendications 1 à 5, caractérisé en ce que le profilé creux est refroidi avant que les autres couches de matières fibreuses (34, 37) soient appliquées avec la matière plastique.

7. Procédé selon l'une quelconque des revendications 1 à 6, caractérisé en ce qu'on dépose, pour l'apport des autres couches de matières fibreuses (34, 37), successivement au moins une couche de matière plastique liquide, un mat de fibres (34) se développant dans le sens longitudinal du profilé creux et dont les bords longitudinaux le recouvrent, ainsi qu'une bande de fibres (37) enroulée hélicoïdalement, et en ce que les autres couches de matières fibreuses (34, 37) sont foulées.

8. Procédé selon l'une quelconque des revendications 1 à 7, caractérisé en ce que le profilé creux est calibré après l'application des autres couches de matières fibreuses (34, 37) et en ce qu'une couche de revêtement de gel extérieure est appliquée, de préférence projetée sur le profilé calibré avant le chauffage final, et est également calibrée.

9. Dispositif pour la fabrication en continu de profilés creux en matière plastique renforcés de fibres, comprenant un mandrin fixe (1), un dispositif d'amenée (2) pour une feuille de séparation (3), un dispositif (7, 11) pour l'application d'une couche de revêtement de gel intérieure sur la feuille de séparation (3), un dispositif d'amenée (19, 23) pour une première couche de matières fibreuses (20, 21), d'autres dispositifs d'amenée (31, 33, 38) pour d'autres couches de matières fibreuses (34, 37) et une matière plastique liquide, un appareil à calibrer (40), une première installation de chauffage (50), un dispositif de prise (52) pour enlever en continu le profilé creux du mandrin (1), ainsi qu'une tronçonneuse (53), caractérisé en ce qu'on a disposé, en considérant le sens du déplacement du profilé creux, en aval du dispositif d'amenée (2) de la feuille de séparation, un dispositif (7, 11) pour l'application de la couche de revêtement de gel intérieur autour du mandrin (1), ainsi qu'une deuxième installation de chauffage (12) et une troisième installation de chauffage (24, 25) en aval du dispositif d'amenée (19, 23) pour la première couche de matières fibreuses (20, 21), et en ce que le mandrin (1) est muni d'un gradin en aval de la troisième installation de chauffage (24, 25) et en amont des autres dispositifs d'amenée (33, 38) pour d'autres couches de matières fibreuses.

10. Dispositif selon la revendication 9, caractérisé en ce que la deuxième et la troisième installation de chauffage (12, 24, 25) sont disposées dans le mandrin (1).

11. Dispositif selon la revendication 10, caractérisé en ce qu'une installation de réfrigération (13, 26) est disposée en aval de la deuxième et de la troisième installation de chauffage (12, 24, 25).

12. Dispositif selon l'une quelconque des revendications 9 à 11, caractérisé en ce qu'un dispositif (17) pour l'application de la couche de revêtement de gel avec une matière plastique liquide est disposé en amont du dispositif d'amenée (19, 23) pour la première couche de matières fibreuses (20, 21), en considérant le sens du déplacement du profilé creux.

13. Dispositif selon l'une quelconque des revendications 9 à 12, caractérisé en ce qu'un dispositif à fouler (35) est prévu en amont de l'appareil à calibrer (40).

14. Dispositif selon l'une quelconque des revendications 9 à 13, caractérisé en ce qu'au moins l'un (38) des autres dispositifs d'amenée (33, 38) pour les autres couches de matières fibreuses (34, 37) comprend un magasin de bandes (38) à même de tourner autour de l'axe du mandrin.

15. Dispositif selon l'une quelconque des revendications 9 à 14, caractérisé en ce qu'un dispositif (44) pour le dépôt d'une couche de revêtement de gel extérieure est situé en amont de la première installation de chauffage (50), en considérant le sens du déplacement du profilé creux.

16. Dispositif selon l'une quelconque des revendications 9 à 15, caractérisé en ce que le dispositif d'amenée (19, 23) pour la première couche de matières fibreuses (20, 21) comprend un magasin de bandes (23) à même de tourner autour de l'axe du mandrin.

17. Dispositif selon l'une quelconque des revendications 9 à 16, caractérisé en ce que des rouleaux de soutien (27) pour le profilé creux sont disposés en aval de la troisième installation de chauffage (24, 25), en considérant le sens du déplacement du profilé creux.

18. Profilé creux renforcé de fibres, comprenant une couche de revêtement de gel interne et externe et des couches situées intermédiairement de matières fibreuses et de thermodurcissables, caractérisé en ce que les couches de matières fibreuses (20, 21, 34, 37) adjointes à la couche de revêtement de gel intérieure se composent de plusieurs couches comprenant un mat de fibres (20, 34) se développant dans le sens longitudinal du profilé creux et une bande de fibres (21, 37) enroulés hélicoïdalement de manière à se recouvrir.

19. Profilé creux selon la revendication 18, caractérisé en ce que tant les mats de fibres (20, 34) que les bandes de fibres (21, 37) se composent de tissus.

20. Profilé creux selon l'une quelconque des revendications 18 et 19, caractérisé en ce que les recouvrements des diverses couches de mats de fibres (20, 34) sont décalés réciproquement dans le sens périphérique.

# Fig. 2

EP 0 233 439 B1

## Fig. 3

## Fig. 4